# FASCICULE DE BREVET EUROPEEN

(11) **EP 2 707 257 B1**
(45) Date de publication et mention de la délivrance du brevet: **03.04.2019**
(21) Numéro de dépôt: 12714017.6
(22) Date de dépôt: 17.04.2012
(51) Int. Cl.: B60S 1/40, B60S 1/52, B60S 1/38

(54) **SOCLE DE CONNEXION, CONNECTEUR MÉCANIQUE ET DISPOSITIF D'ESSUYAGE POUR VÉHICULE AUTOMOBILE**
VERBINDUNGSHALTERUNG, MECHANISCHER VERBINDER UND WISCHVORRICHTUNG FÜR EIN KRAFTFAHRZEUG
CONNECTION MOUNT, MECHANICAL CONNECTOR AND WIPING DEVICE FOR A MOTOR VEHICLE

(30) Priorité: 12.05.2011 FR 1154098
(43) Date de publication de la demande: 19.03.2014
(73) Titulaire: Valeo Systèmes d'Essuyage, 78322 Le Mesnil Saint Denis (FR)
(72) Inventeur: CAILLOT, Gérald, F-78720 Cernay La Ville (FR)
(74) Mandataire: Callu-Danseux, Violaine
(86) Numéro de dépôt international: PCT/EP2012/056968
(87) Numéro de publication internationale: WO 2012/152545

(56) Documents cités:
- WO-A1-2011/088977
- WO-A1-2012/000972
- DE-A1-102004 056 835
- DE-A1-102007 062 304
- DE-A1-102009 043 695
- FR-A1- 2 933 930
- US-A1- 2010 186 185

## Description

La présente invention concerne un socle de connexion destiné à coopérer avec un adaptateur apte à être relié à un bras d'actionnement d'un dispositif d'essuyage de véhicule automobile pour former avec celui-ci un connecteur mécanique pour porter et fixer un balai d'essuie-glace au bras d'actionnement.

Les balais d'essuie-glace comportent des moyens de connexion afin de pouvoir être couplés à un bras d'actionnement de forme appropriée. On rappellera à cet égard qu'il existe différentes sortes de bras, comme par exemple les bras crochets, les bras à axe de pivotement latéral, les bras à clipsage longitudinal, les bras à chape, etc.

Quoi qu'il en soit, les balais d'essuie-glace présentent aujourd'hui l'inconvénient de ne pas être standardisés, notamment au niveau des moyens de connexion chargés d'assurer leur raccordement au bras d'actionnement. Dans la pratique, il existe ainsi autant de sortes de balais d'essuie-glace plats, qu'il y a de bras différents sans considérer les questions de longueur du balai pour la réalisation de l'essuyage de l'ensemble de la zone à essuyer sur le pare-brise. De plus, pour une catégorie de balais d'essuie-glace donnée, on trouve une pluralité de modes de réalisation différents du fait de la multitude de fabricants présents sur ce marché. Cela explique pourquoi au final, il existe un si grand nombre de balais d'essuie-glace plats intégrant des moyens de connexions spécifiques à un type donné de bras d'actionnement.

On connaît du document WO 2008/145481 un connecteur compatible avec divers type de bras d'actionnement pour attacher une lame d'essuyage plat DE-A-102009043695 montre le préambule de la revendication 1.

La présente invention vise à proposer un connecteur compatible avec divers types de bras d'actionnement, qui s'adapte également aux nouvelles et anciennes générations de balais d'essuie-glaces, tel que les balais plats (également dénommés « flat blade » en anglais) ou les balais à mono ou double rampes d'arrosage (également dénommé AquaBlade ®).

A cet effet, la présente invention a pour objet un socle de connexion comportant un support destiné à coopérer avec un adaptateur apte à être relié à un bras 5 d'actionnement d'un dispositif d'essuyage de véhicule automobile et apte à coopérer avec cet adaptateur pour porter et fixer un balai d'essuie-glace au bras d'actionnement, ledit socle de connexion comportant en outre au moins un distributeur de liquide lave-glace présentant au moins une entrée insérable dans un canal d'une conduite de transport lave-glace du bras d'actionnement et présentant au moins une sortie insérable dans un canal d'une monture de support du balai d'essuie-glace, le support présentant une forme allongée et le distributeur de liquide lave- glace comportant deux sorties débouchant respectivement à chaque extrémité opposée du support, caractérisé en ce que le distributeur de liquide lave-glace comporte une canule droite communiquant entre les sorties et une canule inclinée communiquant la canule droite et avec l'entrée et formant un angle aigu avec la canule droite dans un plan perpendiculaire au plan général du socle de connexion.

Selon une ou plusieurs caractéristiques du socle de connexion, prise seule ou en combinaison :
- le distributeur de liquide lave-glace et le support sont formés d'une seule pièce,
- le distributeur de liquide lave-glace est un élément distinct du support, fixé sur un côté du support,
- le distributeur de liquide lave-glace est fixé par encliquetage ou par collage ou par soudage ultrasons,
- le distributeur de liquide lave-glace comporte une canule droite communiquant entre les sorties et une canule inclinée communiquant la canule droite et avec l'entrée et formant un angle aigu avec la canule droite dans un plan général du socle de connexion,
- le support comporte un guidage de retenue d'une première extrémité de l'adaptateur et des moyens de fixation amovibles d'une seconde extrémité de l'adaptateur et la canule inclinée rejoint la canule droite du côté du support portant les moyens de fixation amovibles,
- le guidage de retenue est formé par deux portions de parois latérales et deux portions de parois transversales du support, agencées de manière à former deux logements d'accostage aptes à recevoir des axes latéraux associés d'une première extrémité de l'adaptateur pour former une liaison pivot et au moins un distributeur de liquide lave-glace est logé dans une paroi latérale du support formant en partie le guidage de retenue de l'adaptateur,
- le distributeur de liquide lave-glace comporte une pluralité de sorties munies de gicleurs disposés en rampe.

L'interface standard du socle de connexion et de l'adaptateur permet de connecter mécaniquement tout type de balai d'essuie-glace à tout type de bras d'actionnement. Le distributeur de liquide lave-glace permet par ailleurs de raccorder également la conduite du bras d'actionnement à un ou des orifices d'arrosage, agencés au niveau du connecteur mécanique ou au niveau du balai d'essuie-glace. Les orifices d'arrosage sont donc mobiles simultanément avec le déplacement des balais d'essuyage.

Le connecteur mécanique est ainsi universel et peut distribuer le liquide lave-glace à tout type de balai ou de bras d'actionnement.

L'invention a aussi pour objet un connecteur mécanique pour balai d'essuie-glace pour véhicule automobile, caractérisé en ce que qu'il comprend un socle de connexion tel que décrit précédemment et un adaptateur apte à être relié à un bras d'actionnement d'un dispositif d'essuyage de véhicule automobile, l'adaptateur étant apte à coopérer avec ledit socle de connexion pour porter et fixer un balai d'essuie-glace au bras d'actionnement.

L'invention a encore pour objet un dispositif d'essuyage caractérisé en ce qu'il comporte un balai d'essuie-glace fixé et porté par un connecteur mécanique tel que décrit précédemment.

Selon un exemple de réalisation du dispositif d'essuyage,
- le balai d'essuie-glace comporte une lame d'essuyage, une armature, une vertèbre intérieure et deux montures de support, surmontant la lame d'essuyage, les montures de support étant agencées de part et d'autre du connecteur mécanique,
- au moins une rampe d'arrosage est ménagée longitudinalement dans la monture de support, et
- au moins un canal de circulation de liquide lave-glace, communiquant avec la rampe d'arrosage, est ménagé dans chaque monture de support.

D'autres caractéristiques et avantages de l'invention ressortiront de la description suivante, donnée à titre d'exemple, sans caractère limitatif, en regard des dessins annexés sur lesquels :
- la figure 1 montre une vue schématique en éclaté d'un balai d'essuie-glace « double rampe », un socle de connexion pour ce balai ainsi que plusieurs bras d'actionnement et adaptateurs associés pouvant se connecter à ce même socle de connexion,
- la figure 2 montre une vue en coupe d'un balai d'essuie-glace « double rampe » sur une surface vitrée,
- la figure 3 montre en détail une vue en perspective du socle de connexion de la figure 1,
- la figure 4a représente une vue schématique en coupe de côté du socle de connexion de la figure 3,
- la figure 4b représente une vue schématique de dessus du socle de connexion de la figure 3,
- la figure 5 montre une vue schématique en éclaté d'un balai d'essuie-glace « simple », un socle de connexion selon un deuxième mode de réalisation pour ce balai ainsi que plusieurs bras d'actionnement et adaptateurs associés pouvant se connecter à ce même socle de connexion, et
- la figure 6 montre en détail une vue en perspective du socle de connexion de la figure 5.

Sur ces figures, les éléments identiques portent les mêmes numéros de référence.

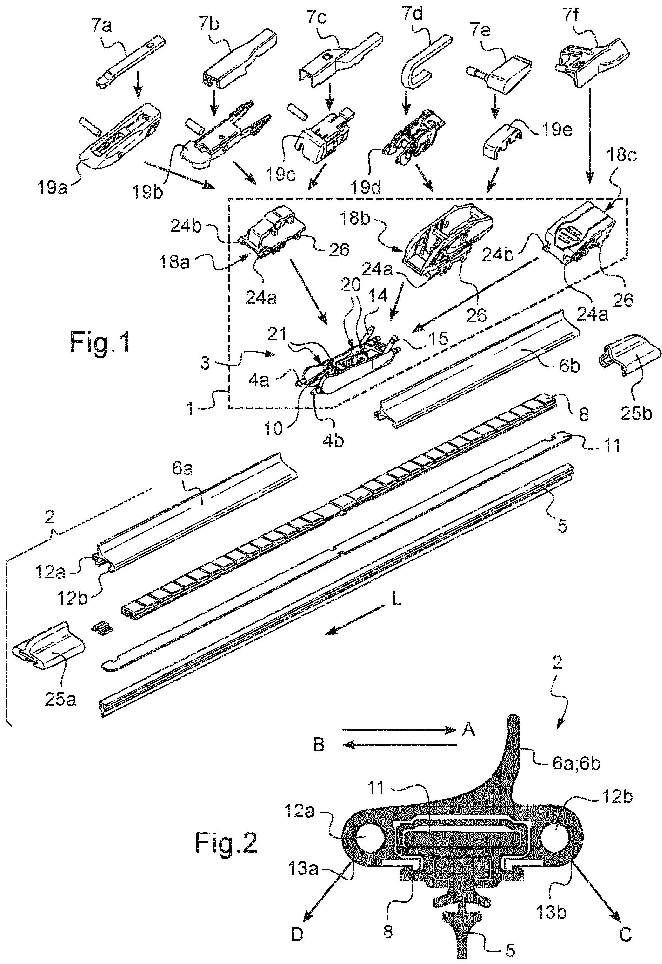

Les figures 1 à 3, 4a et 4b représentent un premier mode de réalisation d'un connecteur mécanique 1 adapté pour un balai d'essuie-glace 2 à « double rampe » (également dénommé AquaBlade ®).

A l'état assemblé sur le véhicule automobile, le balai d'essuie-glace 2 est porté et fixé à un bras d'actionnement 7a, 7b, 7c, 7d, 7e ou 7f d'un dispositif d'essuyage du véhicule par le connecteur mécanique 1.

Le connecteur mécanique 1 comporte pour cela un socle de connexion 3 et un adaptateur 18a, 18b ou 18c relié à un bras d'actionnement 7a-7f. L'adaptateur 18a, 18b, ou 18c coopère avec un support 9 du socle de connexion 3 pour maintenir le balai d'essuie-glace 2 à un bras d'actionnement 7a-7f.

Plus spécifiquement, le balai d'essuie-glace 2 sur monte sur le bras d'actionnement 7a par l'entremise d'une pièce intermédiaire 19a qui est reliée à l'adaptateur 18a qui coopère avec le socle de connexion 9. Alternativement, le balai d'essuie-glace 2 sur monte sur le bras d'actionnement 7b par l'entremise d'une pièce intermédiaire 19b qui se relie au même type d'adaptateur 18a apte à coopérer avec le socle de connexion 9. Egalement le balai d'essuie-glace 2 sur monte sur le bras d'actionnement 7c par l'entremise d'une pièce intermédiaire 19c qui peut être reliée au même adaptateur 18a apte à coopérer avec le socle de connexion 9. Le balai d'essuie-glace 2 sur monte sur le bras d'actionnement 7d par l'entremise d'une pièce intermédiaire 19d qui peut être reliée à un deuxième type d'adaptateur 18b apte à coopérer avec le socle de connexion 9. Le balai d'essuie-glace 2 sur monte sur le bras d'actionnement 7e par l'entremise d'une pièce intermédiaire 19e apte à être reliée à l'adaptateur 18b qui peut coopérer avec le socle de connexion 9. Enfin, le balai d'essuie-glace 2 sur monte sur le bras d'actionnement 7f sans pièce intermédiaire à un troisième type d'adaptateur 18c apte à coopérer avec le socle de connexion 9.

Pour chaque type d'attache du bras d'actionnement 7a-7f, comme par exemple des bras crochets, des bras à axe de pivotement latéral, des bras à clipsage / encliquetage longitudinal, des bras à chape etc. on pourra avoir une pièce intermédiaire spécifique ainsi qu'un adaptateur spécifique, mais chacun de ces adaptateurs 18a, 18b, 18c s'adapte au même socle de connexion 3 par une interface standard.

Le balai d'essuie-glace double rampe 2 s'étend longitudinalement dans la direction L. Il comporte une lame d'essuyage 5, une armature 8 en matériau plastique, une vertèbre intérieure 11 métallique et deux montures de support 6a, 6b surmontant la lame d'essuyage 5.

Mieux visible en figure 2, la lame d'essuyage 5 présente un rétrécissement longitudinal, appelé charnière, lui permettant de pivoter par rapport à l'axe longitudinal L à chaque changement de sens lorsque le balai 2 est actionné par le bras d'actionnement contre la surface vitrée (voir les flèches A et B).

En revenant sur la figure 1, on voit que les deux montures de support 6a, 6b sont montées sur l'armature 8 à laquelle est emboîtée la lame d'essuyage 5. Les montures de support 6a, 6b sont montées de part et d'autre du connecteur mécanique 1, lui même disposé approximativement au milieu du balai d'essuie-glace 2. Les montures de support 6a, 6b présentent une forme aérodynamique particulière, permettant de remplir une fonction d'aileron (de l'anglais « spoiler ») visant à améliorer l'adhérence du balai 2 sur la surface vitrée. Selon l'exemple de réalisation représenté, les montures de support 6a, 6b présentent un logement longitudinal pour la vertèbre intérieure 11 et pour la lame d'essuyage 5. Les montures de support 6a, 6b peuvent être d'un seul tenant et d'un matériau différent de celui de la lame d'essuyage 5. Elles sont par exemple coextrudées avec deux matériaux différents.

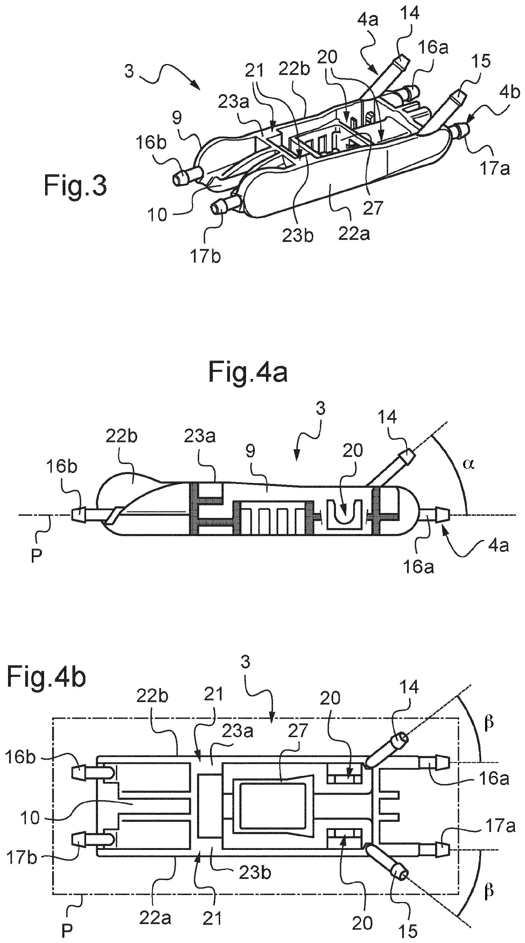

Le support 9 du socle de connexion 3 (figures 3, 4a et 4b) présente une forme allongée destinée à porter l'armature 8 et la vertèbre 11 dans un canal de maintien 10 traversant longitudinalement le support 9. Pour cela, le canal de maintien 10 du support 9 présente des formes adaptées pour coopérer par emboîtement avec une forme correspondante de la vertèbre intérieure 11. L'ensemble comportant les montures de support 6a, 6b, l'armature 8, la vertèbre intérieure 11 et la lame d'essuyage 5, est maintenu assemblé par des moyens de clippage d'extrémité 25a, 25b du balai d'essuie-glace 2.

Chaque monture de support 6a, 6b du balai d'essuie-glace double rampes 2 comporte deux canaux de circulation de liquide lave-glace 12a, 12b ménagés de part et d'autre de la lame d'essuyage 5. Chaque canal de circulation 12a, 12b débouche par une rampe d'arrosage 13a, 13b associée ménagée longitudinalement dans la monture de support 6a, 6b. Les rampes d'arrosage 13a, 13b sont pourvues d'un ou d'une multitude de gicleurs ou orifices d'arrosage sous pression (ou buses), permettant la distribution du liquide lave-glace directement sur la surface vitrée (voir flèches C et D sur la figure 2).

Le socle de connexion 3 comporte en outre deux distributeurs de liquide lave-glace 4a, 4b. Chaque distributeur de liquide lave-glace 4a, 4b comporte une entrée 14, 15 et deux sorties 16a, 16b et 17a, 17b.

Le dispositif d'essuyage comporte en outre une conduite de transport de liquide lave-glace portée par le bras d'actionnement 7a-7f (non représentée). La conduite comporte par exemple un manchon en caoutchouc dans lequel sont ménagés deux canaux de circulation et dans lesquels s'insèrent respectivement les deux entrées 14, 15 des deux distributeurs 4a, 4b. Les canaux de la conduite sont par ailleurs raccordés à une pompe bidirectionnelle ou deux pompes monodirectionnelles du dispositif d'essuyage.

Les sorties 16a, 16b et 17a, 17b de chaque distributeur 4a, 4b débouchent respectivement à chaque extrémité opposée du support 9 (figures 1, 3, 4a et 4b). Les sorties 16a, 16b et 17a, 17b sont insérables dans le canal de circulation respectif 12a, 12b de la monture de support respective 6a, 6b du balai d'essuie-glace 2.

Les entrées 14, 15 et les sorties 16a, 16b, 17a, 17b peuvent comporter des connecteurs rapides. Comme on peut le voir sur la figure 3, les connecteurs rapides comportent des cannelures annulaires, de forme sensiblement tronconique, permettant de faciliter le raccordement aux canaux de circulation de la conduite et des montures de support 6a, 6b et de maintenir en place ce raccordement.

Selon un mode de réalisation alternatif non représenté, les entrées 14, 15 des distributeurs 4a, 4b et la conduite comportent des connecteurs complémentaires. Ces connecteurs complémentaires permettent de faciliter le montage et de « rattraper » l'écartement entre l'espacement des entrées 14, 15 et l'espacement des canaux de la conduite.

Plus spécifiquement, le premier distributeur de liquide lave-glace 4a comporte une canule droite communiquant entre les sorties 16a et 16b et une canule inclinée communiquant avec l'entrée et la canule droite en formant un angle α aigu avec la canule droite dans un plan vertical, c'est-à-dire sensiblement perpendiculaire au plan général P du socle de connexion, parallèle à la surface vitrée (figure 4a). De même, le deuxième distributeur de liquide lave-glace 4b comporte une canule droite communiquant entre les sorties 17a et 17b et une canule inclinée communiquant avec l'entrée 15 et la canule droite en formant un angle aigu avec la canule droite.

Les canules inclinées d'un angle α aigu permettent de diminuer les contraintes au niveau du raccordement entre la conduite et le socle de connexion 3, la conduite de transport étant guidée par le bras d'actionnement.

Egalement, on peut prévoir que les canules inclinées forment un angle β aigu avec la canule droite du distributeur respectif 4a, 4b dans le plan général P du socle de connexion 3 (figure 4b).

Les canules inclinées d'un angle β aigu permettent de dégager un espace latéral dans le socle de connexion 3 facilitant le raccordement de l'adaptateur 18, 18b, 18c au socle de connexion 3.

Les distributeurs de liquide lave-glace 4a, 4b sont par exemple réalisés d'une seule pièce avec le support 9. Le socle de connexion 3 est par exemple en matière plastique et il est obtenu par moulage.

Le socle de connexion 3 est destiné à être fixé à un adaptateur 18a, 18b, 18c présentant également une forme allongée avec une première et une seconde extrémités. L'adaptateur 18a, 18b, 18c est apte à être relié, directement ou par l'intermédiaire d'une pièce supplémentaire 19a, 19b, 19c, 19d ou 19e au bras d'actionnement 7a-7f. Comme on peut le voir sur la figure 1, l'adaptateur 18a, 18b, 18c se fixe sur la face du socle 3 opposée à celle présentant le canal de maintien 10 de la lame d'essuyage 5.

Sur sa face supérieure, l'adaptateur 18a, 18b, 18c est surmonté d'une attache pour le bras d'actionnement. Sur la figure 1, on a représenté un socle de connexion 1 s'adaptant à trois types d'adaptateurs 18a, 18b, 18c qui s'adaptent directement ou par l'intermédiaire de pièces 19a-19e aux divers types de bras d'actionnement 7a-7f représentés sur une ligne en haut de la figure, à savoir de gauche à droite : trois bras différents à clipsage / encliquetage longitudinale 7a, 7b, 7c, un bras à crochet 7d et deux bras à axe de pivotement latéral 7e, 7f. Ainsi, les socles de connexion 1 sont des pièces standardisées qui s'emploient avec tous les types de bras d'actionnement.

Pour fixer l'adaptateur 18a, 18b, 18c sur le socle 3, il est prévu des premières moyens de fixation 20 pour maintenir la première extrémité de l'adaptateur et des second moyens de fixation 21 pour maintenir la seconde extrémité de l'adaptateur 18a, 18b, 18c.

Les premières moyens de fixation comportent dans le support 9 du socle 3 un guidage de retenue 21 de la première extrémité de l'adaptateur. Plus spécifiquement, le guidage de retenue 21 est réalisé d'une part par des portions de parois latérales 22a, 22b du support 9 qui vont assurer un guidage latéral de ladite première extrémité et d'autre part par des portions de paroi transversales 23a, 23b du support 9, perpendiculaires aux parois latérales 22a, 22b, empêchant un déplacement de ladite première extrémité selon une direction perpendiculaire au plan général P défini par ledit socle 1.

Les parois de socle 22a, 22b, 23a, 23b sont agencées de manière à former deux logements d'accostage aptes à recevoir des axes latéraux cylindriques 24a, 24b associés de la première extrémité de l'adaptateur 18a, 18b, 18c. Les axes 24a, 24b de l'adaptateur 18a, 18b, 18c insérés dans les logements d'accostage forment une liaison pivot.

On prévoit ainsi de loger un distributeur de liquide lave-glace 4a, 4b dans chaque paroi latérale 22a, 22b du support 9 formant en partie le guidage de retenue de l'adaptateur.

Les seconds moyens de fixation 20 sont par exemple réalisés sous forme de moyens complémentaires de fixation amovible, la deuxième extrémité présentant des moyens de fixation amovibles complémentaires destinés à coopérer avec des moyens de fixation amovibles du support 9 du socle de connexion 3. Plus spécifiquement les moyens complémentaires de fixation amovibles sont par exemple formés par des moyens d'encliquetage comprenant par exemple deux bras élastiques en forme de fourche aptes à recevoir un pion associé 26 solidaire de l'adaptateur 18a, 18b, 18c. On prévoit par exemple deux pairs de bras - pion.

On prévoit également que pour chaque distributeur 4a, 4b, les canules inclinées rejoignent la canule droite du côté du support 9 portant le moyen de fixation amovible 20.

Le socle 3 peut comporter en outre une forme de centrage 27 apte à coopérer avec une forme complémentaire de l'adaptateur, par exemple réalisée sous forme d'une ouverture carrée dans laquelle une protubérance de forme carrée complémentaire portée par l'adaptateur peut être insérée. Au repos et à l'état assemblé, le balai d'essuie-glace 2 et son socle de connexion 3 présentent un plan de symétrie longitudinal.

A l'assemblage, on monte l'armature 8 dans le socle de connexion 3 en faisant coïncider les formes de l'armature 8 dans le canal de maintien 10. On monte ensuite la vertèbre intérieure 11 dans l'armature 8 en la faisant coulisser dans les découpes de l'armature 8 jusqu'à son blocage dans le canal de maintien 10.

Puis, on insère les sorties 16a, 16b, 16c, 16d du socle de connexion 3 dans les montures de support 6a, 6b que l'on monte sur l'armature 8. On clippe les moyens de clippage d'extrémités 25a, 25b. Ensuite, on introduit les axes 24a, 24b de la première extrémité de l'adaptateur 18a, 18b ou 18c dans les logements d'accostage. Ainsi, les axes 24a et 24b passent en dessous des parois transversales 23a et 23b et sont guidés latéralement par les parois latérales 22a et 22b du support 9. Puis, après l'insertion, on amorce un mouvement de pivotement pour amener les moyens d'encliquetage 20, 26 en vis-à-vis et pour les enclencher par la suite.

Le balai d'essuie -glace double rampe 2 peut ainsi être couplé à tout bras d'actionnement de forme appropriée.

Le liquide lave-glace prélevé par la pompe peut alors circuler dans la conduite le long du bras d'actionnement, alimenter les distributeurs 6a, 6b qui, à son tour envoient le liquide lave-glace dans les canaux de circulations 12a, 12b des montures de support 6a, 6b du balai. Le liquide peut ensuite être distribué le long du balai d'essuie-glace 2, de part et d'autre de la lame d'essuyage 5 et uniquement sur la partie avant du balai, c'est-à-dire sur la rampe d'arrosage 13a située du côté duquel le bras d'actionnement 7a-7f avance pendant une phase descendante du balayage (flèches B et D sur la figure 2) et de l'autre côté (rampe d'arrosage 13b) pendant la phase montante du balayage (flèches A et C). Cet agencement permet d'essuyer instantanément le liquide lave-glace après son dépôt sur la surface vitrée, supprimant ainsi tout intervalle durant lequel la vision aurait pu être réduite.

Selon d'autres exemples de réalisation non représentés, les distributeurs sont fixés sur les côtés du distributeur par collage, par soudage ultrasons ou par encliquetage.

On peut aussi envisager que le socle de connexion comporte un unique distributeur de liquide lave-glace fixé ou intégré dans un côté du support. Ce mode de réalisation conviendrait particulièrement pour un balai d'essuie-glace simple rampe ou mono-rampe dont la monture de support ne comporte qu'un canal de distribution munie d'une rampe d'arrosage. L'arrosage est alors réalisé d'un seul côté du balai et le dispositif d'essuyage ne comporte qu'une pompe mono-directionnelle.

Dans ce cas, on peut prévoir aussi d'agencer l'entrée du distributeur 4a sur un côté du support. L'extrémité de la conduite et l'entrée peuvent comporter des connecteurs complémentaires.

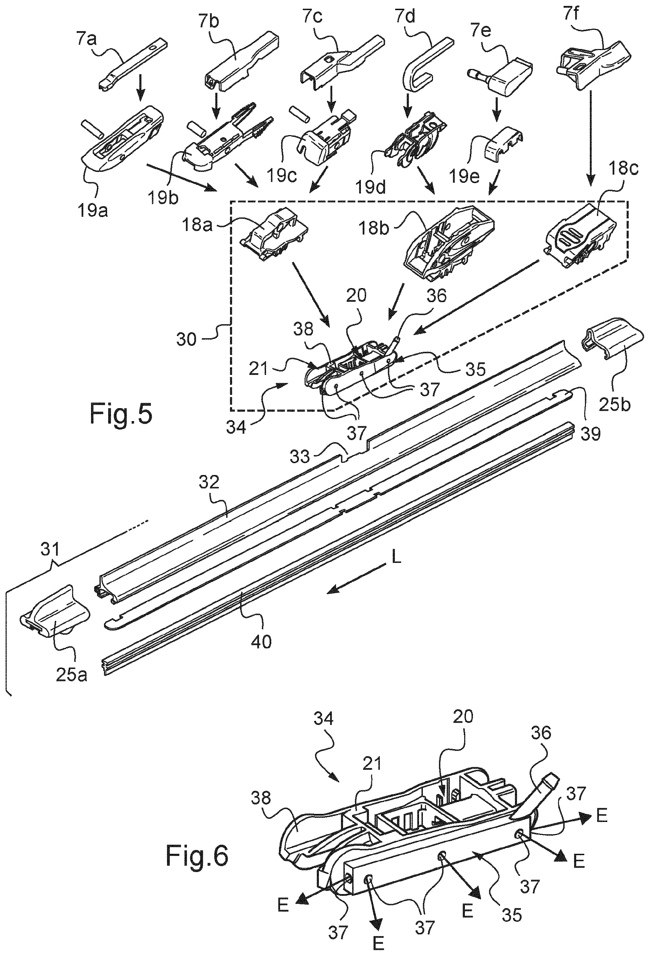

Les figures 5 et 6 représentent un autre mode de réalisation d'un connecteur mécanique 30 pour un balai d'essuie-glace « plat » 31 (également dénommé « flat blade » en anglais) dont la monture de support 32 ne comporte ni rampes d'arrosage intégrées, ni canaux de circulation de liquide lave-glace.

Seuls les éléments différents du premier mode de réalisation sont décrits ci-après.

Dans ce deuxième mode de réalisation, le balai d'essuie-glace 31 comporte une unique monture de support 32 s'étendant longitudinalement sur toute la longueur du balai. La monture de support 32 présente sensiblement en son milieu, une forme découpée 33 laissant apparaître la vertèbre intérieure 39 pour bloquer cette dernière dans les formes du support du socle de connexion 34 du connecteur mécanique 30.

Le socle de connexion 34 comporte un distributeur de liquide lave-glace 35 présentant une entrée 36 insérable dans un canal d'une conduite de transport lave-glace du bras d'actionnement 7a-7f et une pluralité de sorties 37 munies de gicleurs ou orifices d'arrosage sous pression disposés en rampe. Dans l'exemple illustré en figure 6, le distributeur 35 présente ainsi cinq sorties 37, aptes à envoyé du liquide lave-glace en avant et en arrière (longitudinalement) et sur un côté du balai d'essuie-glace 31 (voir flèches E).

Le distributeur de liquide lave-glace 35 est par exemple un élément distinct du support 38. Il est par exemple fixé sur un côté du support 38 par encliquetage ou par collage ou par soudage ultrasons.

Le liquide lave-glace peut ainsi être distribué au niveau du connecteur mécanique 30, sur un côté du bras d'actionnement 7a-7f.

On peut aussi envisager que le socle de connexion comporte deux distributeurs de liquide lave-glace munis d'une pluralité de sorties disposées en rampe, fixés sur chaque côté du support ou réalisés en une seule pièce avec le support (non représenté).

Le support 38 du socle 34 comporte par ailleurs les mêmes moyens de fixation à l'adaptateur 18a, 18b, 18c que dans le premier mode de réalisation.

On comprend qu'avec un connecteur mécanique comportant un distributeur de liquide lave-glace, on peut coupler tout type de balai d'essuie -glace à tout bras d'actionnement.

Le connecteur mécanique 30 est présenté pour être monté sur un balai d'essuie-glace 2, 31 présentant une structure à vertèbre unique 11, 39.

Bien évidemment, il est également prévu de pouvoir monté le connecteur mécanique 30, pour assemblage à un bras d'actionnement, sur un balai d'essuie-glace présentant une structure dans laquelle la lame d'essuyage porte deux vertèbres métalliques. De telles structures de balais à deux vertèbres métalliques sont connues de l'art antérieur et ne nécessitent pas d'être présentées plus en détail.

## Revendications

1. Socle de connexion comportant un support (9 ; 38) destiné à coopérer avec un adaptateur (18a, 18b, 18c) apte à être relié à un bras d'actionnement (7a, 7b, 7c, 7d, 7e, 7f) d'un dispositif d'essuyage de véhicule automobile et apte à coopérer avec cet adaptateur (18a, 18b, 18c) pour porter et fixer un balai d'essuie-glace (2 ; 31) au bras d'actionnement (7a-7f), le socle de connexion (3 ;34) comportant des premiers moyens de fixation (21) pour maintenir une première extrémité de l'adaptateur (18a, 18b, 18c) et des seconds moyens de fixation (20) pour maintenir une seconde extrémité de l'adaptateur (18a, 18b, 18c), ledit socle de connexion (3 ; 34) comportant en outre au moins un distributeur de liquide lave-glace (4a, 4b ; 35) présentant au moins une entrée (14, 15 ; 36) insérable dans un canal d'une conduite de transport lave-glace du bras d'actionnement (7a-7f), le distributeur de liquide lave-glace présentant au moins une sortie (16a, 16b, 17a, 17b) insérable dans un canal d'une monture de support (6a, 6b) du balai d'essuie-glace (2), le support (9) présentant une forme allongée, le distributeur de liquide lave-glace (4a, 4b) comportant deux sorties (16a, 16b, 17a, 17b) débouchant respectivement à chaque extrémité opposée du support (9), **caractérisé en ce que** le distributeur de liquide lave-glace (4a, 4b) comporte une canule droite communiquant entre les sorties (16a, 16b, 17a, 17b) et une canule inclinée communiquant avec la canule droite et avec l'entrée (14, 15) et formant un angle (α) aigu avec la canule droite dans un plan perpendiculaire à un pian général (P) du socle de connexion.

2. Socle de connexion selon la revendication 1, **caractérisé en ce que** le distributeur de liquide lave-glace (4a, 4b) et le support (9) sont formés d'une seule pièce.

3. Socle de connexion selon la revendication 1, **caractérisé en ce que** le distributeur de liquide lave-glace (35) est un élément distinct du support (38).

4. Socle de connexion selon la revendication 3, **caractérisé en ce que** le distributeur de liquide lave-glace (35) est fixé par encliquetage.

5. Socle de connexion selon l'une des revendications précédentes, **caractérisé en ce que** le distributeur de liquide lave-glace (4a, 4b) comporte la canule droite communiquant entre les sorties (16a, 16b, 17a, 17b) et la canule inclinée communiquant avec la canule droite et avec l'entrée (14, 15) et formant un angle (β) aigu avec la canule droite dans un plan général (P) du socle de connexion.

6. Socle de connexion selon l'une des revendications précédentes, **caractérisé en ce que** le support (9) comporte un guidage de retenue (21) d'une première extrémité de l'adaptateur (18a, 18b, 18c) et des moyens de fixation amovibles (20) d'une seconde extrémité de l'adaptateur (18a, 18b, 18c) et **en ce que** la canule inclinée rejoint la canule droite du côté du support (9) portant les moyens de fixation amovibles (20).

7. Socle de connexion selon la revendication 6, prise ensemble avec la revendication 2, **caractérisé en ce que** le guidage de retenue (21) est formé par deux portions de parois latérales (22a, 22b) et deux portions de parois transversales (23a, 23b) du support (9), agencées de manière à former deux logements d'accostage aptes à recevoir des axes latéraux associés (24a, 24b) d'une première extrémité de l'adaptateur (18a, 18b, 18c) pour former une liaison pivot et **en ce qu'**au moins un distributeur de liquide lave-glace (4a, 4b) est logé dans une paroi latérale (22a, 22b) du support (9) formant en partie le guidage de retenue (21) de l'adaptateur (18a, 18b, 18c).

8. Socle de connexion selon l'une des revendications 1 à 4, **caractérisé en ce que** le distributeur de liquide lave-glace (35) comporte une pluralité de sorties (37) munies de gicleurs disposés en rampe.

9. Connecteur mécanique pour balai d'essuie-glace pour véhicule automobile, **caractérisé en ce que** qu'il comprend un socle de connexion selon l'une des revendications 1 à 8 et un adaptateur (18a, 18b, 18c) apte à être relié à un bras d'actionnement (7a-7f) d'un dispositif d'essuyage de véhicule automobile, l'adaptateur (18a, 18b, 18c) étant apte à coopérer avec ledit socle de connexion (3, 34) pour porter et fixer un balai d'essuie-glace (2, 31) au bras d'actionnement (7a-7f).

10. Dispositif d'essuyage **caractérisé en ce qu'**il comporte un balai d'essuie-glace (2, 31) fixé et porté par un connecteur mécanique (1 ; 30) selon la revendication 9.

11. Dispositif d'essuyage selon la revendication 10, prise ensemble avec un socle de connexion selon l'une des revendications 1 à 8, **caractérisé en ce que** le balai d'essuie-glace (2) comporte une lame d'essuyage (5), au moins une vertèbre (11, 39) et au moins une monture de support (6a, 6b, 32), surmontant la lame d'essuyage (5), **en ce qu'**au moins une rampe d'arrosage (13a, 13b) est ménagée longitudinalement dans la monture de support (6a, 6b, 32) et **en ce que** qu'au moins un canal de circulation de liquide lave-glace, communiquant avec la rampe d'arrosage (13a, 13b), est ménagé dans la monture de support (6a, 6b, 32).

12. Dispositif d'essuyage selon la revendication 10, prise ensemble avec un socle de connexion selon l'une des revendications 1 à 8, **caractérisé en ce que** le balai d'essuie-glace (2) comporte une lame d'essuyage (5), une armature (8), une vertèbre intérieure (11) et deux montures de support (6a, 6b), surmontant la lame d'essuyage (5), les montures de support (6a, 6b) étant agencées de part et d'autre du connecteur mécanique (1), **en ce qu'**au moins une rampe d'arrosage (13a, 13b) est ménagée longitudinalement dans la monture de support (6a, 6b) et **en ce que** qu'au moins un canal de circulation de liquide lave-glace, communiquant avec la rampe d'arrosage (13a, 13b), est ménagé dans chaque monture de support (6a, 6b).

## Patentansprüche

1. Verbindungshalterung, die einen Träger (9; 38) umfasst, der dazu bestimmt ist, mit einem Adapter (18a, 18b, 18c) zusammenzuwirken, der geeignet ist, mit einem Betätigungsarm (7a, 7b, 7c, 7d, 7e, 7f) einer Kraftfahrzeug-Wischvorrichtung verbunden zu sein, und geeignet ist, mit diesem Adapter (18a, 18b, 18c) zusammenzuwirken, um ein Scheibenwischerblatt (2; 31) zu tragen und an dem Betätigungsarm (7a bis 7f) zu befestigen, wobei die Verbindungshalterung (3; 34) erste Befestigungsmittel (21) zum Halten eines ersten Endes des Adapters (18a, 18b, 18c), und zweite Befestigungsmittel (20) zum Halten eines zweiten Endes des Adapters (18a, 18b, 18c) umfasst, wobei die Verbindungshalterung (3; 34) außerdem mindestens einen Scheibenwaschflüssigkeitsverteiler (4a, 4b; 35) umfasst, der mindestens einen Einlass (14, 15; 36) aufweist, der in einen Kanal einer Scheibenwasch-Transportleitung des Betätigungsarms (7a bis 7f) einfügbar ist, wobei der Scheibenwaschflüssigkeitsverteiler mindestens einen Auslass (16a, 16b, 17a, 17b) aufweist, der in einen Kanal einer Tragfassung (6a, 6b) des Scheibenwischerblatts (2) einfügbar ist, wobei der Träger (9) eine gestreckte Form aufweist, wobei der Scheibenwaschflüssigkeitsverteiler (4a, 4b) zwei Auslässe (16a, 16b, 17a, 17b) umfasst, die jeweils an jedem entgegengesetzten Ende des Trägers (9) münden, **dadurch gekennzeichnet, dass** der Scheibenwaschflüssigkeitsverteiler (4a, 4b) eine gerade Kanüle umfasst, die zwischen den Auslässen (16a, 16b, 17a, 17b) verbindet, und eine geneigte Kanüle, die mit der geraden Kanüle und dem Einlass (14, 15) verbindet, und einen spitzen Winkel (α) mit der geraden Kanüle in einer Ebene senkrecht zu einer allgemeinen Ebene (P) der Verbindungshalterung bildet.

2. Verbindungshalterung nach Anspruch 1, **dadurch gekennzeichnet, dass** der Scheibenwaschflüssigkeitsverteiler (4a, 4b) und der Träger (9) aus einem einzigen Teil gebildet sind.

3. Verbindungshalterung nach Anspruch 1, **dadurch gekennzeichnet, dass** der Scheibenwaschflüssigkeitsverteiler (35) ein Element ist, das von dem Träger (38) getrennt ist.

4. Verbindungshalterung nach Anspruch 3, **dadurch gekennzeichnet, dass** der Scheibenwaschflüssigkeitsverteiler (35) durch Einrasten befestigt ist.

5. Verbindungshalterung nach einem der vorstehenden Ansprüche, **dadurch gekennzeichnet, dass** der Scheibenwaschflüssigkeitsverteiler (4a, 4b) die gerade Kanüle umfasst, die zwischen den Auslässen (16a, 16b, 17a, 17b) verbindet, und die geneigte Kanüle, die mit der geraden Kanüle und mit dem Einlass (14, 15) verbindet und einen spitzen Winkel (β) mit der geraden Kanüle in einer allgemeinen Ebene (P) der Verbindungshalterung bildet.

6. Verbindungshalterung nach einem der vorstehenden Ansprüche, **dadurch gekennzeichnet, dass** der Träger (9) eine Rückhalteführung (21) eines ersten Endes des Adapters (18a, 18b, 18c) und abnehmbare Befestigungsmittel (20) eines zweiten Endes des Adapters (18a, 18b, 18c) umfasst, und dass die geneigte Kanüle die gerade Kanüle auf der Seite des Trägers (9), der die abnehmerbaren Befestigungsmittel (20) trägt, erreicht.

7. Verbindungshalterung nach Anspruch 6, gemeinsam mit Anspruch 2 genommen, **dadurch gekennzeichnet, dass** die Rückhalteführung (21) aus zwei Abschnitten von Seitenwänden (22a, 22b) und zwei Abschnitten von Querwänden (23a, 23b) des Trägers (9) gebildet ist, die derart eingerichtet sind, dass sie zwei Andockaufnahmen bilden, die geeignet sind, assoziierte seitliche Achsen (24a, 24b) eines ersten Endes des Adapters (18a, 18b, 18c) aufzunehmen, um eine Schwenkverbindung zu bilden, und dass mindestens ein Scheibenwaschflüssigkeitsverteiler (4a, 4b) in einer Seitenwand (22a, 22b) des Trägers (9), die zum Teil die Rückhalteführung (21) des Adapters (18a, 18b, 18c) bildet, aufgenommen ist.

8. Verbindungshalterung nach einem der Ansprüche 1 bis 4, **dadurch gekennzeichnet, dass** der Scheibenwaschflüssigkeitsverteiler (35) eine Mehrzahl von Auslässen (37) umfasst, die mit Einspritzdüsen, die als Rampe angeordnet sind, versehen sind.

9. Mechanischer Steckverbinder für Scheibenwischerblatt für Kraftfahrzeug, **dadurch gekennzeichnet, dass** er eine Verbindungshalterung nach einem der Ansprüche 1 bis 8 und einen Adapter (18a, 18b, 18c), der geeignet ist, mit einem Betätigungsarm (7a bis 7f) einer Kraftfahrzeug-Wischvorrichtung verbunden zu sein, umfasst, wobei der Adapter (18a, 18b, 18c) geeignet ist, mit der Verbindungshalterung (3, 34) zusammenzuwirken, um ein Scheibenwischerblatt (2, 31) an dem Betätigungsarm (7a bis 7f) zu tragen und zu befestigen.

10. Wischvorrichtung, **dadurch gekennzeichnet, dass** sie ein Scheibenwischerblatt (2, 31) umfasst, das von einem mechanischen Steckverbinder (1; 30) nach Anspruch 9 befestigt und getragen wird.

11. Wischvorrichtung nach Anspruch 10, gemeinsam mit einer Verbindungshalterung nach einem der Ansprüche 1 bis 8 genommen, **dadurch gekennzeichnet, dass** das Scheibenwischerblatt (2) einen Wischgummi (5), mindestens einen Wirbel (11, 39) und mindestens eine Tragfassung (6a, 6b, 32), die über dem Wischgummi (5) liegt, umfasst, und dass mindestens eine Sprührampe (13a, 13b) längs in der Tragfassung (6a, 6b, 32) eingerichtet ist, und dass mindestens ein Scheibenwaschflüssigkeit-Zirkulationskanal, der mit der Sprührampe (13a, 13b) verbindet, in der Tragfassung (6a, 6b, 32) eingerichtet ist.

12. Wischvorrichtung nach Anspruch 10, gemeinsam genommen mit einer Verbindungshalterung nach einem der Ansprüche 1 bis 8, **dadurch gekennzeichnet, dass** das Scheibenwischerblatt (2) einen Wischgummi (5), eine Bewehrung (8), einen inneren Wirbel (11) und zwei Tragfassungen (6a, 6b), die über dem Wischgummi (5) liegen, umfasst, wobei die Tragfassungen (6a, 6b) auf jeder Seite des mechanischen Steckverbinders (1) eingerichtet sind, dass mindestens eine Sprührampe (13a, 13b) längs in der Tragfassung (6a, 6b) eingerichtet ist, und dass mindestens ein Scheibenwaschflüssigkeits-Zirkulationskanal, der mit der Sprührampe (13a, 13b) verbindet, in jeder Tragfassung (6a, 6b) eingerichtet ist.

## Claims

1. A connection mount comprising a support (9; 38) intended to collaborate with an adapter (18a, 18b, 18c) able to be connected to an actuating arm (7a, 7b, 7c, 7d, 7e, 7f) of a motor vehicle wiper device and able to collaborate with this adapter (18a, 18b, 18c) to bear a wiper blade (2; 31) and attach it to the actuating arm (7a-7f), the connection mount (3; 34) comprising first attachment means (21) for holding a first end of the adapter (18a, 18b, 18c) and second attachment means (20) for holding a second end of the adapter (18a, 18b, 18c), said connection mount (3; 34) further comprising at least one washer fluid distributor (4a, 4b; 35) having at least one inlet (14, 15; 36) that can be inserted into a canal of a washer fluid conveying pipe of the actuating arm (7a-7f), the washer fluid distributor having at least one outlet (16a, 16b, 17a, 17b) that can be inserted into a canal of a support fixture (6a, 6b) of the wiper blade (2), the support (9) having an elongate shape, the washer fluid distributer (4a, 4b) having two outlets (16a, 16b, 17a, 17b) respectively opening at each opposite end of the support (9), **characterized in that** the washer fluid distributor (4a, 4b) comprises a straight tube communicating between the outlets (16a, 16b, 17a, 17b) and an inclined tube communicating with the straight tube and with the inlet (14, 15) and forming an acute angle (α) with the straight tube in a plane perpendicular to the overall plane (P) of the connection mount.

2. The connection mount as claimed in claim 1, **characterized in that** the washer fluid distributor (4a, 4b) and the support (9) are formed as a single piece.

3. The connection mount as claimed in claim 1, **characterized in that** the washer fluid distributor (35) is an element distinct from the support (38).

4. The connection mount as claimed in claim 3, **characterized in that** the washer fluid distributor (35) is attached by clip fastening.

5. The connection mount as claimed in one of the preceding claims, **characterized in that** the washer fluid distributor (4a, 4b) comprises the straight tube communicating between the outlets (16a, 16b, 17a, 17b) and the inclined tube communicating with the straight tube and with the inlet (14, 15) and forming an acute angle (β) with the straight tube in an overall plane (P) of the connection mount.

6. The connection mount as claimed in one of the preceding claims, **characterized in that** the support (9) comprises a retaining guide (21) for a first end of the adapter (18a, 18b, 18c) and removable means (20) of attachment of a second end of the adapter (18a, 18b, 18c), and **in that** the inclined tube meets the straight tube on the side of the support (9) that bears the removable means (20) of attachment.

7. The connection mount as claimed in claim 6 considered in combination with claim 2, **characterized in that** the retaining guide (21) is formed by two lateral wall portions (22a, 22b) and two transverse wall portions (23a, 23b) of the support (9) which are arranged in such a way as to form two receiving housings able to accept associated side pins (24a, 24b) of a first end of the adapter (18a, 18b, 18c) to form a pivot connection, and **in that** at least one washer fluid distributor (4a, 4b) is housed in a lateral wall (22a, 22b) of the support (9) partially forming the retaining guide (21) for the adapter (18a, 18b, 18c).

8. The connection mount as claimed in one of claims 1 to 4, **characterized in that** the washer fluid distributor (35) comprises a plurality of outlets (37) fitted with jets arranged as a spray bar.

9. A mechanical connector for a motor vehicle windshield wiper, **characterized in that** it comprises a connection mount as claimed in one of claims 1 to 8 and an adapter (18a, 18b, 18c) able to be connected to an actuating arm (7a-7f) of a motor vehicle wiper device, the adapter (18a, 18b, 18c) being able to collaborate with said connection mount (3, 34) to bear a wiper (2, 31) and attach it to the actuating arm (7a-7f).

10. A wiper device, **characterized in that** it comprises a wiper (2, 31) that is attached and borne by a mechanical connector (1; 30) as claimed in claim 9.

11. The wiper device as claimed in claim 10, considered in combination with a connection mount as claimed in one of claims 1 to 8, **characterized in that** the wiper (2) comprises a blade rubber (5), at least one backing strip (11, 39) and at least one support fixture (6a, 6b, 32) surmounting the blade rubber (5), **in that** at least one spray bar (13a, 13b) is formed longitudinally in the support fixture (6a, 6b, 32), and **in that** at least one washer fluid circulation canal, communicating with the spray bar (13a, 13b), is formed in the support fixture (6a, 6b, 32).

12. The wiper device as claimed in claim 10 considered in combination with a connection mount as claimed in one of claims 1 to 8, **characterized in that** the wiper (2) comprises a blade rubber (5), a frame (8), an internal backing strip (11) and two support fixtures (6a, 6b) surmounting the blade rubber (5), the support fixtures (6a, 6b) being arranged on either side of the mechanical connector (1), **in that** at least one spray bar (13a, 13b) is formed longitudinally in the support fixture (6a, 6b), and **in that** at least one washer fluid circulation canal, communicating with the spray bar (13a, 13b), is formed in each support fixture (6a, 6b).
